# EUROPÄISCHE PATENTSCHRIFT

(11) **EP 1 412 628 B1**
(45) Veröffentlichungstag und Bekanntmachung des Hinweises auf die Patenterteilung: **02.11.2006**
(21) Anmeldenummer: 02753018.7
(22) Anmeldetag: 17.07.2002
(51) Int. Cl.: F02D 11/10, F02D 9/10, F16H 35/10

(54) **ANTRIEBSEINRICHTUNG**
DRIVE DEVICE
DISPOSITIF D'ENTRAINEMENT

(30) Priorität: 30.07.2001 DE 10137026
(43) Veröffentlichungstag der Anmeldung: 28.04.2004
(73) Patentinhaber: SIEMENS AKTIENGESELLSCHAFT, 80333 München (DE)
(72) Erfinder: HILDEBRANDT, Jörg, 63477 Maintal (DE); KÖHLER, Stefan, 60437 Frankfurt (DE)
(86) Internationale Anmeldenummer: PCT/DE2002/002607
(87) Internationale Veröffentlichungsnummer: WO 2003/016696

(56) Entgegenhaltungen:
- EP-A- 0 272 352
- EP-A- 0 548 945
- DE-A- 19 842 195
- DE-C- 820 659
- US-B1- 6 189 507
- US-B1- 6 200 221
- PATENT ABSTRACTS OF JAPAN vol. 2000, no. 03, 30. März 2000 (2000-03-30) -& JP 11 344095 A (MATSUSHITA ELECTRIC IND CO LTD), 14. Dezember 1999 (1999-12-14) -& DATABASE WPI Section PQ, Week 200019 Derwent Publications Ltd., London, GB; Class Q63, AN 2000-213889 XP002222544 & JP 11 344095 A (MATSUSHITA ELECTRIC IND CO LTD), 14. Dezember 1999 (1999-12-14)

## Beschreibung

Die Erfindung bezieht sich auf eine Antriebseinrichtung, bei der von einem Stellantrieb über ein Getriebe ein bewegliches Element antreibbar ist, bei der das Getriebe ein Motorritzel, ein Zwischenrad und einen Zahnkranz umfasst, und das Zwischenrad ein Ritzel und ein Zahnrad umfasst, wobei das Ritzel und das Zahnrad über eine Ratsche so verbunden sind, dass das drehstarr mit der Ratsche verbundene Ritzel gegen das Zahnrad rastklinkenartig verdrehbar ist.

Zur Steuerung der Frischgasmenge eines Kraftfahrzeugs werden üblicherweise Drosselklappenstutzen eingesetzt. Drosselklappenstutzen umfassen ein Gehäuse mit einer Drosselöffnung und ein in der Drosselöffnung angeordnetes Drosselorgan. Das Drosselorgan umfasst üblicherweise eine, auf einer Drosselklappenwelle angeordnete Drosselklappe, die schwenkbar in dem Gehäuse des Drosselklappenstutzens angeordnet ist. Die Drosselklappe nimmt für den Durchlass einer bestimmten Frischgasmenge eine bestimmte Stellung in der Drosselöffnung ein. Hierzu ist die Drosselklappenwelle mechanisch oder elektromechanisch ansteuerbar.

Bei einer elektromechanischen Ansteuerung der Drosselklappenwelle weist üblicherweise der Drosselklappenstutzen eine Positionserfassungseinrichtung auf, über die die jeweils aktuelle Position der Drosselklappenwelle erfassbar ist. In Abhängigkeit von der jeweils aktuellen Position der Drosselklappenwelle wird dann entweder innerhalb oder außerhalb des Drosselklappenstutzens ein Signal erzeugt, mit dem die Drosselklappenwelle über den in dem Drosselklappenstutzen angeordneten Stellantrieb ansteuerbar ist. Je nach Stellung der Drosselklappenwelle und damit der Drosselklappe ist dabei die Drosselöffnung von der Drosselklappe teilweise verschlossen, was einer Offenstellung der Drosselklappe entspricht, oder aber auch vollständig verschlossen, was einer Schließstellung der Drosselklappe entspricht.

Verstellt nun der Stellantrieb die Drosselklappe von einer Offenstellung in eine Schließstellung, so wird der Stellantrieb erst dann stromlos geschaltet, nachdem die Drosselklappenwelle mit der auf ihr angeordneten Drosselklappe eine Stellung einnimmt, bei der die Drosselklappe die Drosselöffnung annähernd vollständig verschließt. Nach dem Abstellen oder Stromlos-Schalten des Stellantriebs dreht sich dieser jedoch aufgrund der Schwungenergie selnes Rotors noch ein wenig weiter und überträgt damit Schwungenergie auf das Getriebe. Das Getriebe sollte diese Schwungenergie abfangen, ohne dabei Schaden zu nehmen. Befindet sich jedoch die Drosselklappenwelle in einer Position, die der Schließstellung der Drosselklappe entspricht und liegt die Drosselklappe mechanisch in der Schlief3steilung an einem Absatz in der Drosselöffnung an, so wird das Getriebe aufgrund der auf das Getriebe übertragenen Schwungenergie versuchen, die Drosselklappe über den Absatz in der Drosselöffnung hinaus zu verdrehen. Da üblicherweise der Anschlag härter ist als die Zahnräder des Getriebes, kommt es hierbei häufig zu einem Bruch einzelner Zähne der Zahnräder des Getriebes, ohne dass die Drosselklappe durch die Drosselklappenwelle verschwenkt wird.. Dieser vorhersehbare Getriebeschaden verkürzt die Lebensdauer derartiger Getriebe erheblich, wodurch deren Einsatz insbesondere in Drosselklappenstutzen unwirtschaftlich ist.

Eine solche Antriebseinrichtung ist beispielsweise aus der EP 0 272 352 A2 bekannt. Hierbei weist das Zwischenzahnrad eine Ratsche auf. Dabei hat das Zahnrad einen Kranz Sperrklinken und das Ritzel gegen die Sperrklinken vorgespannte Ratschgeometrien. Das Ritzel ist einstückig mit den Ratschgeometrien gefertigt. Damit verhindert die Ratsche, dass überschüssige Schwungenergie auf das bewegliche Element übertragen wird. Nachteilig bei der bekannten Antriebseinrichtung ist jedoch, dass das Getriebe ein hohes Gewicht aufweist, Das hohe Gewicht der Antriebseinrichtung trägt jedoch maßgeblich zum Entstehen der überschüssigen Schwungenergie bei.

Aus der US 6,189,507 B1 ist es bekannt, bei einer Antriebseinrichtung den Zahnkranz als Teilzahnkranz auszubilden. Dies führt zu einer Verringerung des Gewichts. Nachteilig bei dieser Antriebseinrichtung ist jedoch, dass die verbleibende Schwungenergie direkt auf das bewegliche Element übertragen wird, was zu einer geringen Lebensdauer der Antriebseinrichtung führt.

Der Erfindung liegt daher die Aufgabe zugrunde, eine Antriebseinrichtung der oben genannten Art anzugeben, deren Getriebe ein besonders geringes Gewicht aufweist und die besonders einfach zu fertigen ist.

Diese Aufgabe wird erfindungsgemäß dadurch gelöst, dass der Zahnkranz als Teilzahnkranz ausgebildet ist und dass das Zahnrad und das Ritzel aus Kunststoff und die Ratsche aus Metall gefertigt sind, wobei die Ratsche auf das Ritzel aufgeklipst ist.

Durch diese Gestaltung wird das Gewicht des Getriebes zunächst durch die Ausbildung des Zahnkranzes als Teilzahnkranz verringert.

Vorteilhafterweise ist das bewegliche Element eine in einem Drosselklappenstutzen angeordnete Drosselklappenwelle, auf der eine Drosselklappe schwenkbar angeordnet ist. Drosselklappenstutzen mit einer derartigen Antriebseinrichtung weisen einen besonders geringen Platzbedarf auf und sind daher besonders vielseitig einsetzbar.

Die mit der Erfindung erzielten Vorteile bestehen insbesondere darin, dass die Antriebseinrichtung einerseits einen besonders geringen Raumbedarf erfordert und dass über das Getriebe der Antriebseinrichtung zuverlässig Schwungenergie des Stellantriebs auch dann abfangbar ist, wenn die Drosseiklappenwelle über die an einem Anschlag in der Drosselöffnung anliegende Drosselklappe in einer Festen Position fixiert ist.

Ein erstes Ausführungsbeispiel und ein zweites Ausführungsbeispiel werden anhand einer Zeichnung näher erläutert. Darin zeigen:
- Fig.1: schematisch einen Querschnitt durch einen Drosselktappenstutzen mit einer Antriebseinrichtung zur Verschwenkung einer auf einer Drosselklappenwelle angeordneten Drosselklappe,
- Fig. 2: schematisch einen Längsschnitt durch die Drosselöffnung des Drosselklappenstutzens gemäß Figur 1,
- Fig.3: schematisch eine Draufsicht auf die Antriebseinrichtung des Drosseklappenstutzens gemäß Figur 1,
- Fig.4: schematisch die Einzelteile des Zwischenrads des Getriebes und
- Fig. 5: schematisch das Zwischenrad in verschiedenen Ansichten.

Einander entsprechende Teile sind in allen Figuren mit den gleichen Bezugszeichen versehen.

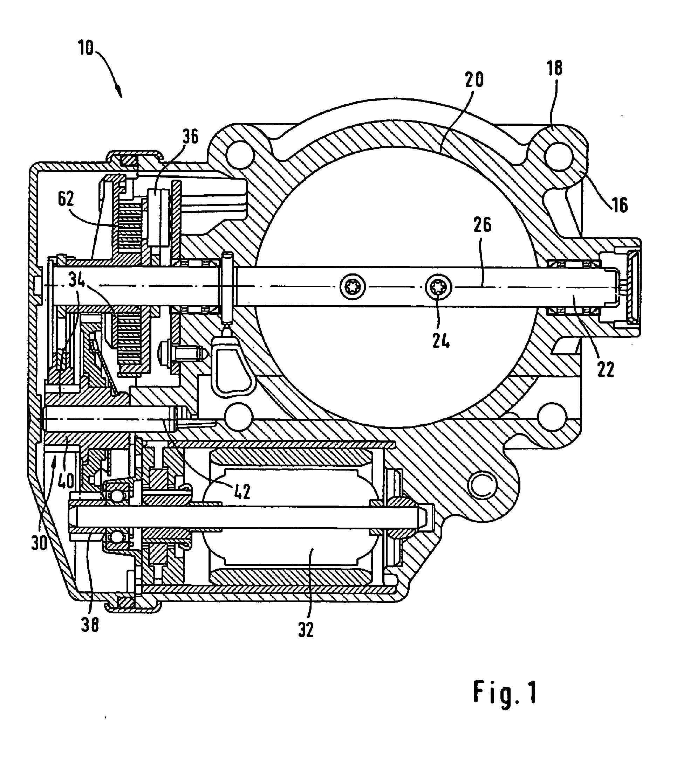

Der Drosselklappenstutzen 10 gemäß Figur 1 dient dazu, einem nicht dargestellten Verbraucher beispielsweise einer Einspritzeinrichtung eines ebenfalls nicht dargestellten Kraftfahrzeugs, ein Luft- oder ein Kraftstoff-Luftgemisch zuzuführen, wobei mittels des Drosselklappenstutzens 10 die dem Verbraucher zuzuführende Frischgasmenge steuerbar ist. Hierzu weist der Drosselklappenstutzen 10 ein Gehäuse 16 auf, das überwiegend aus Metall 18, insbesondere Aluminium, gefertigt ist und im Spritzgußverfahren hergestellt worden ist. Alternativ kann das Gehäuse 16 jedoch auch vollständig aus Kunststoff gefertigt sein. Das Gehäuse 16 weist eine Drosselöffnung 20 auf, über die dem nicht dargestellten Verbraucher Luft- bzw. ein Kraftstoff-Luft-Gemisch zuführbar ist.

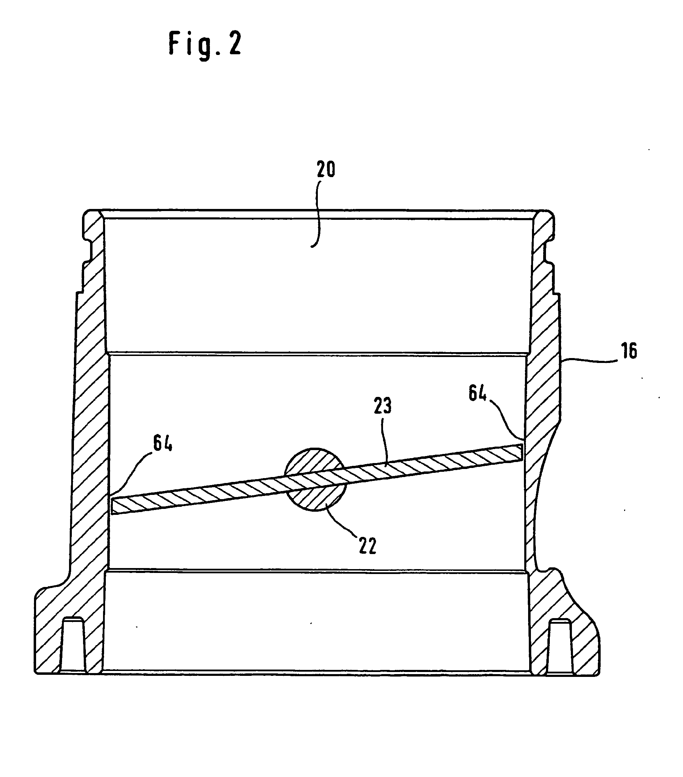

Zur Einstellung des zuzuführenden Volumens des Frischgases ist auf einer Drosselklappenwelle 22 eine Drosselklappe 23 angeordnet. Die Drosselklappe 23 ist aufgrund der Schnittdarstellung nicht zu sehen, jedoch in Figur 2 dargestellt. Zu sehen sind jedoch die Befestigungspunkte 24, an denen die Drosselklappe 23 auf der Drosselklappenwelle 22 befestigt ist. Eine Drehung der Drosselklappenwelle 22 um ihre Drehachse 26 bewirkt gleichzeitig eine Verschwenkung der auf der Drosselklappenwelle 22 angeordneten Drosselklappe 23, wodurch der aktive Querschnitt der Drosselöffnung 20 vergrößert oder verkleinert wird. Mittels einer Vergrößerung oder Verkleinerung des aktiven Querschnitts der Drosselöffnung 120 durch die Drosselklappe 23 erfolgt eine Regulierung des Durchsatzes des Luft- bzw. Kraftstoff-Luftgemischs durch die Drosselöffnung 20 des Drosselklappenstutzen 10.

Die Drosselklappenwelle 20 kann mit einer nicht näher dargestellten Seilscheibe verbunden sein, die wiederum über einen Bowdenzug mit einer Einstellvorrichtung für eine Leistungsanforderung verbunden ist. Die Einstellvorrichtung kann hierbei als Gaspedal eines Kraftfahrzeugs ausgebildet sein, so daß eine Betätigung dieser Einstellvorrichtung durch den Fahrer des Kraftfahrzeugs die Drosselklappe 23 von einer Stellung minimaler Öffnung, insbesondere einer Schließstellung bis in eine Stellung maximaler Öffnung, insbesondere einer Offenstellung, gebracht werden kann, um hierdurch die Leistungsabgabe des Fahrzeugs zu steuern.

Die in Figur 1 gezeigte Drosselklappenwelle 22 des Drosselklappenstutzens 10 ist im Gegensatz dazu entweder in einem Teilbereich von einem Stellantrieb und ansonsten über das Gaspedal einstellbar oder aber die Drosselklappe 23 ist über den gesamten Verstellbereich von einem Stellantrieb einstellbar. Bei diesen sogenannten E-Gas oder Drive-by-wire-Systemen wird die mechanische Leistungssteuerung, beispielsweise Niederdrücken eines Gaspedals, in ein elektrisches Signal umgesetzt. Dieses Signal wird wiederum einer Steuereinheit zugeführt, die ein Ansteuersignal für den Stellantrieb erzeugt. Es gibt bei diesen Systemen im Normalbetrieb keine mechanische Kopplung zwischen dem Gaspedal und der Drosselklappe.

Zur Verstellung der Drosselklappenwelle 22 und damit der Drosselklappe 23. weist daher der Drosselklappenstutzen 10 eine Antriebseinrichtung 30 auf, die in dem Gehäuse 16 des Drosseklappenstutzens 10 angeordnet ist. Die Antriebseinrichtung 30 zeigt Figur 1 im Schnitt.

Die Antriebseinrichtung 30 ist in dem Gehäuse 16 des Drosselklappenstutzens 10 angeordnet und umfaßt einen als Elektromotor ausgebildeten Stellantrieb 32. Der als Elektromotor ausgebildete Stellantrieb 32 bewegt über ein als Untersetzungsgetriebe ausgebildetes Getriebe 34 die Drosselklappenwelle 22. Das Getriebe 34 gehört auch zu der Antriebseinrichtung 30. Der Stellantrieb 32 ist in nicht näher dargestellter Weise mit einer außerhalb des Drosselklappenstutzens 10 angeordneten Stromquelle und mit einer Steuereinheit verbunden. Die Steuereinheit übermittelt dem Stellantrieb 32 ein Signal, mittels dessen der Stellantrieb 32 eine bestimmte Stellung der Drosselklappenwelle 22 über das als Untersetzungsgetriebe ausgebildete Getriebe 34 herbeiführt. Die tatsächliche Position der Drosselklappenwelle 22 ist über eine als Potentiometer ausgebildete Positionserfassungseinrichtung 36 erfaßbar, bei der der Schleifer der als Potentiometer ausgebildeten Positionserfassungseinrichtung 36 in nicht näher dargestellter Weise mit der Drosselklappenwelle 22 verbunden ist.

Zum Übertragen einer Drehbewegung von dem als Elektromotor ausgebildeten Stellantrieb 32 auf die Drosselklappenwelle 22 umfaßt das als Untersetzungsgetriebe ausgebildete Getriebe 34 ein Motorritzel 38, das drehstarr mit der Antriebswelle, die in der Zeichnung nicht näher dargestellt ist, des als Elektromotor ausgebildeten Stellantriebs 32 verbunden ist. Das Motorritzel 38 kämmt mit einem ebenfalls dem Getriebe 34 zugehörigen Zwischenrad 40, das auf einer Achse 42 drehbar in dem Gehäuse 16 des Drosselklappenstutzens 10 angeordnet ist.

Das Zwischenrad 40 umfaßt ein Ritzel 44 und ein Zahnrad 46. Das Ritzel 44 und das Zahnrad 46 sind aus Kunststoff 48 gefertigt. Das Ritzel 44 und das Zahnrad 46 sind über eine Ratsche 50 rastklinkenartig miteinander verbunden. Die Ratsche 50 ist dabei federartig aus Metall 52 gefertigt. Die Ratsche 50 greift einerseits in Unterschnitte 54 des Ritzels 44 in der Weise, daß die Ratsche 50 und das Ritzel 44 drehstarr miteinander verbunden sind. Andererseits greift die Ratsche 50 in eine Ratschanordnung 56, die auf dem Zahnkranz 46 angeordnet ist. Die Ratschanordnung 56 ist so ausgelegt, daß bei dem Überschreiten einer bestimmten Kraftschwelle das Zahnrad 46 sich relativ zu dem Ritzel 44 verdreht. Dabei bewegt sich die Ratsche 50 in der Ratschenanordnung 56 in Abhängigkeit von der auf das Zahnrad ausgeübten Kraft eine oder mehrere Einheiten entlang der Ratschanordnung 56. Unterhalb einer bestimmten Kraftschwelle sind das Zahnrad 46 und das Ritzel 44 also drehstarr miteinander verbunden, wohingegen oberhalb einer bestimmten Kraftschwelle das Zahnrad 46 relativ zu dem Ritzel 44 verdrehbar ist.

Das Ritzel 44 kämmt mit einem Teilzahnkranz 58, der ebenfalls dem Getriebe 34 zugeordnet ist. Der Teilzahnkranz 58 ist auf einem Hebel 60 angeordnet, der drehstarr mit der Drosselklappenwelle 22 verbunden ist. Der Teilzahnkranz 58 und der Hebel 60 sind ebenfalls dem Getriebe 34 zugeordnet. Weiterhin ist die Drosselklappenwelle 22 mit einem ersten Ende einer Spiralfeder 62 verbunden, deren zweites Ende fest mit dem Gehäuse 16 verbunden ist.

Die Drosselöffnung 20 weist eine Kontur 64 auf, was in Figur 2 im Detail zu sehen ist. Diese Kontur bewirkt, daß bei einer Verstellung der Drosselklappe 23 mittels der Antriebseinrichtung 30 in Richtung Schließstellung die Drosselklappe 23 an der Kontur 64 zum Anliegen kommt und durch den Stellantrieb 32 über diese Anschlagposition hinaus nicht bewegbar ist.

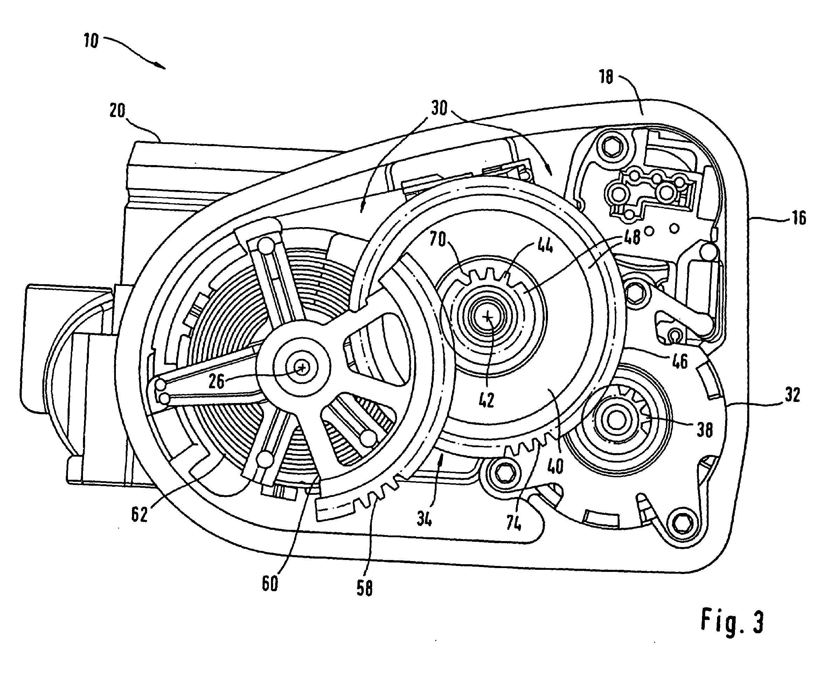

Figur 3 zeigt die Antriebseinrichtung 30 des Drosselklappenstutzens 10 in einer Draufsicht. Das drehstarr mit der Antriebswelle des Stellantriebs 32 verbundene Motorritzel 38 kämmt mit dem Zahnrad 46 des Zwischenrads 40. Das Zahnrad 46 ist über die Ratsche 50 mit dem Ritzel 44 verbunden. Diese Verbindung ist auf der dem Betrachter von Figur 3 abgewandten Seite angeordnet und daher in der Figur 3 nicht zu sehen. Zu sehen ist jedoch das Ritzel 44, das mit dem Teilzahnkranz 58 kämmt. Der Teilzahnkranz 58 ist dabei auf dem fest mit der Drosselklappenwelle 22 verbundenen Hebel 60 angeordnet.

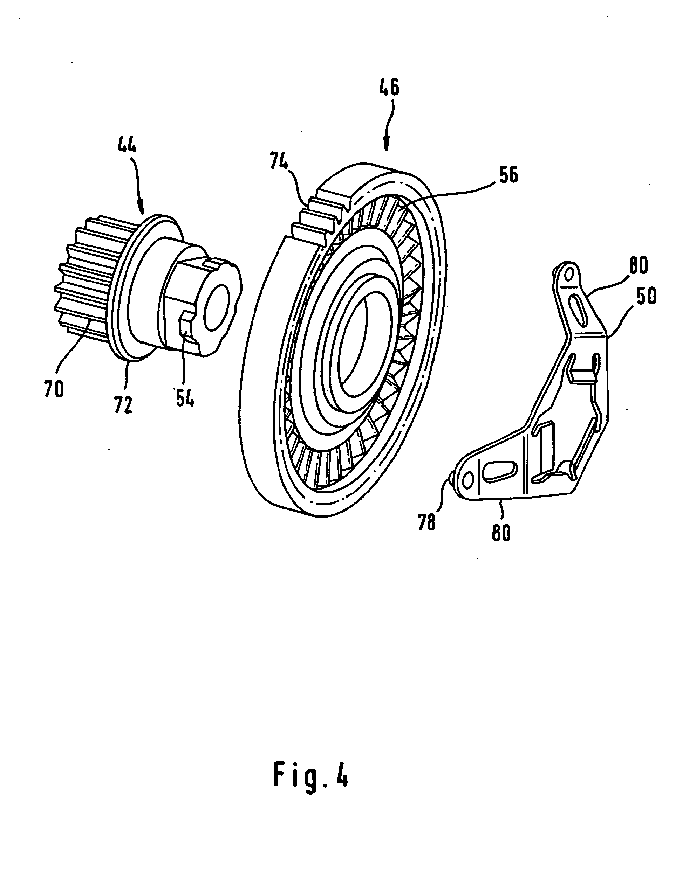

Figur 4 zeigt die Einzelteile Ritzel 44, Zahnkranz 46 und Ratsche 50. Das Ritzel 44 des Zwischenrads 40 weist auf seiner einen Seite eine Zahnkranzstruktur 70 und auf seiner anderen Seite einen Unterschnitt 54 auf, in den die Ratsche 50 für eine drehstarre Verbindung mit dem Ritzel 44 einrastbar ist. Mit einem umlaufenden Steg 72 ist dabei das Ritzel 44 in dem Zahnrad 46 des Zwischenrads 40 anzuordnen.

Der Zahnkranz 46 weist eine äußere umlaufende Zahnkranzstruktur 74 sowie eine innere Ratschanordnung 56 auf. Die Ratschanordnung 56 umfaßt eine Anzahl von regelmäßigen schiefen Ebenen oder Ratschanordnungen 76, die kreisförmig aneinandergereiht sind. In drei dieser Ebenen oder Ratschanordnungen 76 greift die Ratsche 50 mit Ratschgeometrien 78, vorzugsweise kugelförmig, die an den Enden der drei Beine 80 der Ratsche 50 angeordnet sind.

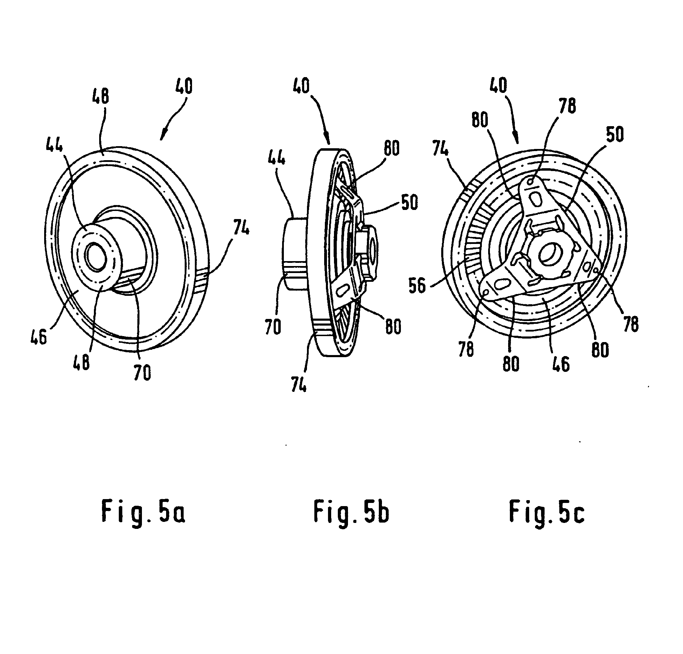

Figur 5 zeigt das Zwischenrad in Figur 5a von vom, in Figur 5b von der Seite und in Figur 5c von hinten.

Wirkt nun auf das Zahnrad 46 eine Kraft, die eine bestimmte Kraftschwelle überschreitet, so wandern die Kugeln oder Ratschgeometrien 78 der Ratsche 50 auf den jeweiligen schiefen Ebenen oder Ratschanordnungen 76 hinauf, um dann in die nächste, angrenzende schiefe Ebene oder Ratschanordnung 78 einzurasten. In Abhängigkeit von der auf das Zahnrad einwirkenden Kraft bewegen sich dabei die Kugeln oder Ratschgeometrien 78 der Ratsche 50 eine oder mehrere schiefe Ebenen oder Ratschanordnungen 76 weiter.

Beim Betrieb des Drosselklappenstutzens 10 wird die auf der Drosselklappenwelle 22 angeordnete Drosselklappe 23 über die Antriebseinrichtung 30 geöffnet und geschlossen. Dabei wird der Stellantrieb 32 von einer in der Zeichnung nicht näher dargestellten Steuereinrichtung angesteuert. Bewegt nun der Stellantrieb 32 oder die Spiralfeder 62 über das Getriebe 34 die Drosselklappe 23 in die Schließposition, so können hohe Kräfte auf das Getriebe 34 in der Schließposition wirken. Schließposition ist dabei die Position, in der die Drosselklappe 23 die Drosselöffnung 20 annähernd vollständig verschließt. Nach dem Erreichen der Schließposition des Stellantriebs 32 bewegt sich jedoch dessen Antriebswelle noch weiter aufgrund der Schwungenergie, die noch im Elektromotor vorhanden ist. Dieser Rest an Schwungenergie wird von der Antriebswelle des Stellantriebs 32 über das Motorritzel 38 auf das Zahnrad 46 des Zwischenrads 40 übertragen. Da die Drosselklappe 32 aber nun an der Kontur 64 anliegt, folgt das Ritzel 44 nicht der Drehbewegung des Zahnrads 46. Die hierbei auf das Zahnrad 46 einwirkenden Kräfte sind so groß, daß das Zahnrad 46 sich mittels der Ratsche 50 relativ zu dem Ritzel 44 verdreht. Die Ratschanordnung 56 des Zahnrads 46 ist dabei so angeordnet, daß die Drehbewegung des Zahnrads 46 relativ zu dem Ritzel 44 der Vorzugsdrehrichtung des Ratscheneingriffs zwischen dem Ritzel 44 und dem Zahnrad 46 entspricht. Ohne den Ratscheneingriff zwischen dem Ritzel 44 und dem Zahnrad 46 bestünde die Gefahr, daß beim Erreichen der Schließposition durch die Drosselklappe 23 einzelne Zähne des Getriebes, insbesondere des Ritzels 44, brechen könnten, wodurch der Drosselklappenstutzen 10 im Extremfall funktionsunfähig werden würde.

Durch die Verbindung des Ritzels 44 mit dem Zahnrad 46 über die Ratsche 50 ist zuverlässig gewährleistet, daß überschüssige Schwungenergie des Stellantriebs 32 auch dann abfangbar ist, wenn die Drosselklappe 23 beispielsweise in einer Schließpositon in der Drosselöffnung 20 des Drosselklappenstutzens 10 fixiert ist.

## Patentansprüche

1. Antriebseinrichtung (30), bei der von einem Stellantrieb (32) über ein Getriebe (34) ein bewegliches Element (22) antreibbar ist, bei der das Getriebe (34) ein Motorritzel (38), ein Zwischenrad (40) und einen Zahnkranz umfasst, und das Zwischenrad (40) ein Ritzel (44) und ein Zahnrad (46) umfasst, wobei das Ritzel (44) und das zahnrad (46) über eine Ratsche (50) so verbunden sind, dass das der starr mit der Ratsche (50) verbundene Ritzel (44) gegen das Zahnrad (46) rastklinkenartig verdrehbar ist, **dadurch gekennzeichnet , dass** der zahnkranz als Teilzahnkranz (58) ausgebildet ist, und dass das Zahnrad (46) und das Ritzel (44) aus Kunststoff und die Ratsche (50) aus Metall gefertigt sind, wobei die Ratsche (50) auf das Ritzel (44) aufgeklipst ist.

2. Antriebseinrichtung (30) nach Anspruch 1, **dadurch gekennzeichnet , dass** das bewegliche Element (22) eine in einem Drosselklappenstutzen (10) angeordnete Drosselklappenwelle (22) ist, auf der eine Drosselklappe (23) schwenkbar angeordnet ist.

## Claims

1. Drive device (30), in which a movable element (22) can be driven by an actuator (32) via a gear unit (34) and in which the gear unit (34) comprises a motor pinion (38), an intermediate wheel (40) and a toothed ring, and the intermediate wheel (40) comprises a pinion (44) and a gearwheel (46), the pinion (44) and the gearwheel (46) being connected via a ratchet (50) in such a way that the pinion (44) connected fixedly in terms of rotation to the ratchet (50) can be rotated in relation to the gearwheel (46) in the manner of a locking pawl, **characterized in that** the toothed ring is configured as a part-toothed ring (58), and **in that** the gearwheel (46) and the pinion (44) are manufactured from plastic and the ratchet (50) from metal (52), the ratchet (50) being snapped onto the pinion (44).

2. Drive device (30) according to Claim 1, **characterized in that** the movable element (22) is a throttle valve shaft (22) which is arranged in a throttle valve assembly (10) and on which a throttle valve (23) is arranged pivotably.

## Revendications

1. Système d'entraînement (30) dans lequel un organe mobile (22) peut être entraîné par un actionneur (32) à travers une transmission (34), où la transmission (34) comprend un pignon (38) de moteur, une roue intermédiaire (40) et une couronne dentée et où la roue intermédiaire (40) comprend un pignon (44) et une roue dentée (46), le pignon (44) et la roue dentée (46) étant liés par l'intermédiaire d'un mécanisme à rochet (50) de telle manière que le pignon (44), qui est fixe par rapport au mécanisme à rochet (50), peut tourner par rapport à la roue dentée (46) avec un effet de cliquet d'arrêt, **caractérisé par le fait que** la couronne dentée est conçue comme couronne dentée partielle (58) et que la roue dentée (46) et le pignon (44) sont fabriqués en matière plastique et le mécanisme à rochet (50), en métal, le mécanisme à rocher (50) étant agrafé sur le pignon (44).

2. Système d'entraînement (30) selon la revendication 1, **caractérisé par le fait que** l'organe mobile (22) est un arbre (22) de papillon de régulation des gaz monté dans une tubulure (10) à papillon de régulation des gaz, arbre sur lequel est monté en pivotement un papillon de régulation des gaz (23).
